# EUROPEAN PATENT APPLICATION

(11) **EP 2 511 138 A1**
(43) Date of publication of application: **17.10.2012**
(21) Application number: 11162245.2
(22) Date of filing: 13.04.2011
(51) Int. Cl.: B60R 1/06, B62D 35/00

(54) **Vehicle side-view mirror**

(71) Applicant: Volvo Car Corporation, 40 531 Göteborg (SE)
(72) Inventor: Disley, Jonathan, 44244, Kungälv (SE)

(57) **Abstract**

A side-view mirror (1) for a vehicle comprises a mirror (2), housing (3) and an attachment device (4) for connecting the side-view mirror (1) to the vehicle. There is an opening (5) in the front side of the housing (3) and a gap (6) between the housing (3) and the mirror (2). The housing (3) further comprises a passage allowing air to flow into the housing (3) in said opening (5) and out from the housing (3) through said gap (6) between the mirror (2) and the housing (3).

## Description

### FIELD OF THE INVENTION

The present invention relates to a side-view mirror for a vehicle comprising a mirror, housing and an attachment device for connecting the side-view mirror to the vehicle.

### BACKGROUND

A side-view mirror (also fender mirror, door mirror, side mirror or wing mirror) is a mirror found on the exterior of motor vehicles for the purposes of helping the driver see areas behind and to the sides of the vehicle, outside of the driver's peripheral vision (in the 'blind spot').

Although almost all modern cars mount their side-view mirrors on the doors, normally at the "A" pillar, rather than the wings (fenders - portion of body above the wheel well), the "wing mirror" term is still frequently used. However, wing mirrors continue to be relatively common in the Japanese domestic market. The mirrors on bicycles and motorcycles are usually mounted to the handlebars, and there are usually two of them.

The side-view mirror is equipped for manual or remote vertical and horizontal adjustment so as to provide adequate coverage to drivers of differing height and seated position. Remote adjustment may be mechanical by means of bowden cables, or may be electric by means of geared motors. The mirror glass may also be electrically heated, often in conjunction with the vehicle's rear window defogger, to thaw accumulated snow and ice. Increasingly, the side-view mirror incorporates the vehicle's turn signal repeaters. Thus, in recent years, many automakers have been incorporating side turn signal devices into the side-view mirror housings, rather than mounting them on the vehicle's fenders. There is also evidence to suggest mirror-mounted indicators may be more effective than indicators mounted in the previously predominant fender side location.

As for all exterior items of a vehicle, it is of interest to keep the drag coefficient as low as possible for fuel economy reasons.

### SUMMARY OF THE INVENTION

The object of the present invention is to provide a side-view rear mirror with a low drag coefficient. A further object is to integrate an indicator into the side-view mirror.

These objects are achieved by the side-view rear mirror as set forth in the appended claims.

The side-view mirror for a vehicle according to the present invention comprises a mirror, housing and an attachment device for connecting the side-view mirror to the vehicle. Further is there an opening in the front side of the housing and a gap between the housing and the mirror. The housing also comprises a passage allowing air to flow into the housing in said opening and out from the housing through said gap between the mirror and the housing. The drag coefficient can in this way be reduced and the mirror is because of the air flow through the housing somewhat more protected against filth from the road.

According to one aspect of the present invention the passage in the housing comprises curved surfaces in order to minimise the turbulence. Thus, the curved and preferably smooth surfaces inside the housing help reducing the losses and accordingly the drag coefficient.

The cross-section area of the housing immediately behind the mirror is according to another aspect of the present invention bigger or equal to the area of the mirror. Most preferable is to have the areas basically equal, however, in some situations it could even be an advantage to have the area of the mirror somewhat larger than the cross-section area of the housing immediately behind the mirror. The relations between the cross-section area of the housing and the area of the mirror and the width of the gap between the housing and the mirror have to be carefully taken into consideration. Especially when the housing is not designed as a frame for the mirror, i.e. when the areas (cross-section of the housing immediately behind the mirror and the mirror) are more or less equal, care should be taken that items do not easily get stuck or caught in the gap. Also preferred is that the plane of the gap between the housing and the mirror is parallel with the mirror.

According to one object of the present invention the housing comprises a source of light being arranged such that light is visible through the gap and the opening in the front side of the housing. Having the source of light inside the housing and directing the light out through the gap and the front side opening of the housing makes the indicator light of the present invention more easy to detect from almost any angle of observation. The light source being placed inside the housing also means that there is no need of a traditional indicator cover. For optimising fuel consumption the source of light is preferably an LED. For efficient spreading of the light the housing advantageously comprises light reflectors which indirectly also leads to a better fuel economy since less power is needed for the light source in order for the indicator to light up properly.

According to a further aspect of the present invention the light source is arranged in the housing on the opposite end of the housing attachment device, i.e. generally in the outer part of the side-view mirror. This placement is advantageous for more efficient spreading of the light since it possible to place the light source in a more advantageous angle towards the from the outside visible surface of the housing adjacent the opening in the front side of the housing.

The side-view mirror according to the present invention is also preferably equipped with a mirror that is electrically heated. This is becoming more common, especially for vehicles in countries with winter climate, i.e. where the temperature a part of the year has sub zero centigrades.

According to yet another aspect of the present invention the side-view mirror housing comprises a geared motor for adjusting the angle of the mirror. This is also becoming more or less standard for all vehicles.

### BRIEF DESCRIPTION OF FIGURES

The side-view mirror according to the present invention is explained below in more detail with reference to the figures.
Figure 1 is a perspective view from the front side of the side-view mirror according to the present invention.
Figure 2 is a perspective side view of the side-view mirror in figure 1.

### DISCLOSURE OF PREFERRED EMBODIMENTS

The side-view mirror according to the present invention will be explained with reference made to the enclosed figures. The examples are chosen in order to facilitate the reading and understanding of the invention.

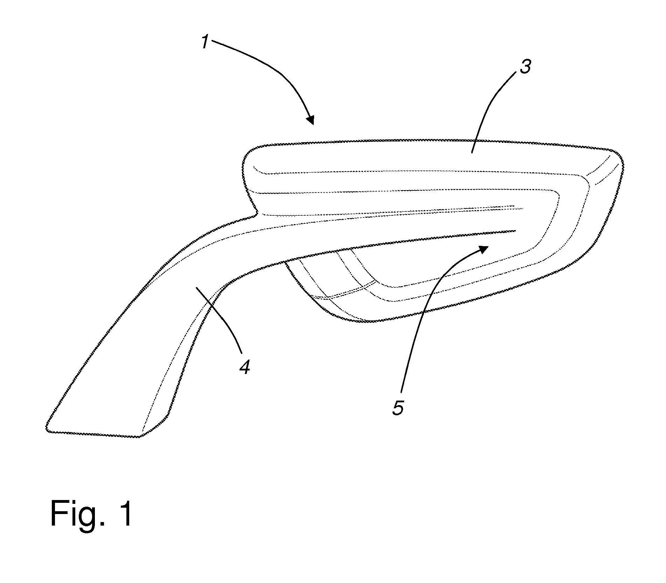

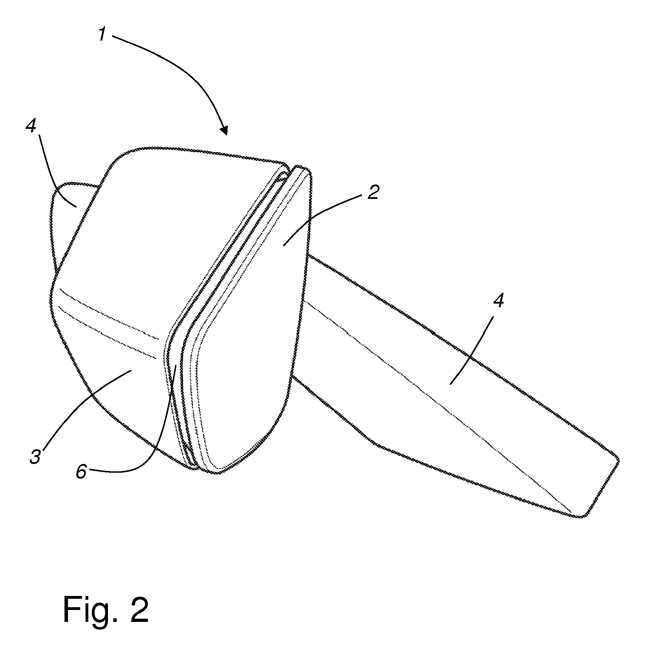

Figures 1 and 2 shows a side-view mirror 1 for a vehicle comprising a mirror 2, housing 3 and an attachment device 4 for connecting the side-view mirror 1 to the vehicle. Also shown is an opening 5 in the front side of the housing 3 and a gap 6 between the housing 3 and the mirror 2, the housing 3 further comprising a passage (not shown) allowing air to flow into the housing 3 in said opening 5 and out from the housing 3 through said gap 6 between the mirror 2 and the housing 3.

In a preferred embodiment the passage in the housing 3 comprises curved surfaces (not shown) in order to minimise the turbulence.

As further can be seen in figure 2 the cross-section area of the housing 3 immediately behind the mirror 2 is basically equal to the area of the mirror 2. There is a gap 6 all the way round the mirror such that the plane of the gap 6 between the housing 3 and the mirror 2 is parallel with the mirror 2.

In yet a preferred embodiment the housing 3 comprises a source of light (not shown) being arranged such that light is visible through the gap 6 and the opening 5 in the front side of the housing 3 which allows for an indicator light to be seen from close to all angles around the side-view mirror. The light source is preferably an LED and for more efficiency the housing 3 comprises light reflectors (not shown).

The foregoing is a disclosure of an example practicing the present invention. However, it is apparent that method incorporating modifications and variations will be obvious to one skilled in the art. Inasmuch as the foregoing disclosure is intended to enable one skilled in the art to practice the instant invention, it should not be construed to be limited thereby, but should be construed to include such modifications and variations as fall within the scope of the claims. For instance, the housing could be arranged as a frame for the mirror as for traditional side-view mirrors but still with a gap between the mirror and the housing allowing air to flow from the opening on the front side of the housing through the housing and out from the housing via the gap.

## Claims

1. A side-view mirror (1) for a vehicle comprising a mirror (2), housing (3) and an attachment device (4) for connecting the side-view mirror (1) to the vehicle,
**characterised in**
**that** there is an opening (5) in the front side of the housing (3) and a gap (6) between the housing (3) and the mirror (2), the housing (3) further comprising a passage allowing air to flow into the housing (3) in said opening (5) and out from the housing (3) through said gap (6) between the mirror (2) and the housing (3).

2. A side-view mirror (1) according to claim 1, wherein the passage in the housing (3) comprises curved surfaces in order to minimise the turbulence.

3. A side-view mirror (1) according to any of the preceding claims, wherein the cross-section area of the housing (3) immediately behind the mirror (2) is bigger or equal to the area of the mirror (2).

4. A side-view mirror (1) according to any of the preceding claims, wherein the plane of the gap (6) between the housing (3) and the mirror (2) is parallel with the mirror (2).

5. A side-view mirror (1) according to any of the preceding claims, wherein the housing (3) comprises a source of light being arranged such that light is visible through the gap (6) and the opening (5) in the front side of the housing (3).

6. A side-view mirror (1) according to claim 5, wherein the source of light is an LED.

7. A side-view mirror (1) according to any of the claims 5 and 6, wherein the housing (3) comprises light reflectors.

8. A side-view mirror (1) according to any of the claims 5-7, wherein light source is arranged in the housing (3) on the opposite end of the housing attachment device (4).

9. A side-view mirror (1) according to any of the preceding claims, wherein the mirror (2) is electrically heated.

10. A side-view mirror (1) according to any of the preceding claims, wherein the housing (3) comprises a geared motor for adjusting the angle of the mirror (2).
